# EUROPÄISCHE PATENTANMELDUNG

(11) **EP 0 940 282 A2**
(43) Veröffentlichungstag der Anmeldung: **08.09.1999**
(21) Anmeldenummer: 99102256.7
(22) Anmeldetag: 05.02.1999
(51) Int. Cl.: B60J 7/08

(54) **Steuereinrichtung für ein Fahrzeug mit zwei Dächern**

(30) Priorität: 04.03.1998 DE 19809064
(71) Anmelder: Dr.Ing. h.c.F. Porsche Aktiengesellschaft, 70435 Stuttgart (DE)
(72) Erfinder: Ritter, Bernhard, 75181 Pforzheim (DE); Dahmen, Hans-Dieter, 75242 Neuhausen (DE)

(57) **Zusammenfassung**

Die Erfindung betrifft eine Steuereinrichtung für ein Fahrzeug mit zwei Dächern, wobei ein erstes Dach am Fahrzeug ständig angeordnet ist und ein zweites Dach vom Fahrzeug abnehmbar ist. Damit die Steuereinrichtung bei aufgesetztem zweiten Dach das erste Dach nicht mehr betätigt, ist an einer Verschlußeinrichtung, die zur lösbaren Verbindung beider Dächer mit einem Windschutzscheibenrahmen des Fahrzeuges dient, ein erster Geber vorgesehen, der ein Signal abgibt, wenn sich die Verschlußeinrichtung im geschlossenem Zustand befindet. Ferner ist ein zweiter Geber vorgesehen, der bei geöffnetem ersten Dach ein Signal abgibt. Die Steuereinrichtung unterdrückt nun eine Betätigung des ersten Daches, wenn gleichzeitig die Signale beider Geber vorliegen.

## Beschreibung

Die Erfindung betrifft eine Steuereinrichtung für ein Fahrzeug mit zwei Dächern, wobei ein erstes Dach am Fahrzeug ständig angeordnet ist und ein zweites Dach vom Fahrzeug abnehmbar ist.

Eine derartige Kombination zweier Dächer bei einem Fahrzeug liegt beispielsweise bei einem Fahrzeug mit Cabrio-Dach vor, bei dem ergänzend, d.h. ohne Austausch gegen das Cabrio-Dach, ein Hardtop aufsetzbar ist.

Bei derartigen Fahrzeugen stellt sich das Problem, daß die Steuereinrichtung bei aufgesetztem zweiten Dach das erste Dach nicht mehr betätigen darf. Es ist Aufgabe der Erfindung, eine derartige Betätigung mit geringem baulichen Aufwand zu erzielen.

Diese Aufgabe wird mit den Merkmalen des Patentanspruches 1 gelöst. Erfindungsgemäß ist an einer Verschlußeinrichtung, die zur lösbaren Verbindung beider Dächer mit einem Windschutzscheibenrahmen des Fahrzeuges dient, ein erster Geber vorgesehen, der ein Signal abgibt, wenn sich die Verschlußeinrichtung im geschlossenem Zustand befindet. Ferner ist ein zweiter Geber vorgesehen, der bei geöffnetem ersten Dach ein Signal abgibt. Die Steuereinrichtung unterdrückt nun eine Betätigung des ersten Daches, wenn gleichzeitig die Signale beider Geber vorliegen. Die genannten Geber sind in der Regel ohnehin am Fahrzeug vorgesehen und werden von der Steuereinrichtung bei abgenommenem zweiten Dach zur Betätigung des ersten Daches verwendet. Damit ist die Erfindung ohne zusätzlichen baulichen Aufwand zu verwirklichen. Allgemein basiert die Erfindung auf der Idee, das aufgesetzte zweite Dach dadurch zu erkennen, daß ein für das erste Dach nicht plausibler Zustand der Geber vorliegt: Das erste Dach kann nicht gleichzeitig vollständig geöffnet sein (Signal des zweiten Gebers liegt vor) und durch den Verschlußeinrichtung mit dem Windschutzscheibenrahmen verbunden sein (Signal des ersten Gebers liegt vor).

Vorteilhafte Weiterbildungen der Erfindung sind in den Unteransprüchen beschrieben.

So wird vorgeschlagen, daß die Steuereinrichtung ferner die Ansteuerung weiterer Betätigungseinrichtungen beeinflußt, wenn gleichzeitig von beiden Gebern ein Signal anliegt. Hiermit kann die Art der Ansteuerung weitere Betätigungseinrichtungen davon abhängig gemacht werden, ob das zweite Dach aufgesetzt ist oder nicht. Weitere Betätigungseinrichtungen sind beispielsweise Fensterheber für Seitenscheiben des Fahrzeuges. Diese sind bei aufgesetztem zweiten Dach in einem anderen Funktionsumfang betätigbar, als dies bei geöffnetem ersten Dach ohne aufgesetztem zweiten Dach der Fall. So sind bei geöffnetem ersten Dach hintere Seitenscheiben nicht mehr zu schließen und bleiben daher in ihrer vollständig abgesenketn Position, nachdem sie beim Öffnen des ersten Daches automatisch vollständig abgesenkt worden sind. Alternativ kann es vorgesehen sein, daß die hinteren Seitenscheiben nicht über vordere Seitenscheiben hinaus angehoben werden können. Eine weitere Alternative ist eine gemeinsame Betätigung der vorderen und hinteren Seitenscheiben bei geöffneten ersten Dach. Bei erkanntem aufgesetztem zweiten Dach hingegen - auch hierfür ist das erste Dach vollständig geöffnet können alle Seitenscheiben unabhängig voneinander in jede beliebige Position bewegt werden.

Ein weiter von der Öffnungsstellung beeinflußter Funktionsumfang betrifft die Positionssteuerung der Seitenscheibe: da bei geöffnetem ersten Dach kein Anschlag für eine Aufwärtsbewegung der Seitenscheiben vorhanden ist, muß der Endpunkt der Seitenscheiben beim Schließen über einen Positionsgeber bestimmt werden. Bei erkanntem aufgesetztem zweitem Dach hingegen können die Seitenscheiben hingegen solange bewegt werden, bis sie an der Dichtung anlegen; der Endpunkt der Seitenscheiben beim Schließen wird hier über eine Lasterkennung am Fensterheber bestimmt.

Die Erfindung ist nachstehend anhand des in den Figuren dargestellten Ausführungsbeispieles näher beschrieben. Es zeigen
- Fig. 1: Ein Fahrzeug mit einem vollständig geöffneten ersten Dach und einem aufgesetzten zweiten Dach und
- Fig. 2: einen Schnitt durch eine Verschlußeinrichtung zur Verbindung eines der Dächer mit einem Windschutzscheibenrahmen des Fahrzeuges.

Ein als Cabriolet ausgebildetes Fahrzeug 1 ist mit einem als flexiblem Faltdach ausgebildeten ersten Dach 2 versehen, das am Fahrzeug 1 ständig angeordnet ist. Im geöffneten Zustand ist das erste Dach 2 in einem Verdeckkasten 3 abgelegt, der durch einen Verdeckkastendeckel 4 verschlossen ist. Eine Antriebseinrichtung 5 dient zum Antrieb des ersten flaches 2 im Sinne eines Öffnens oder Schließens. Der Verdeckkastendeckel 4 ist entweder durch eine Zwangssteuerung mit der Antriebseinrichtung 5 verbunden oder mit einer eigenen Antriebseinrichtung (nicht dargestellt) versehen. Der Verdeckkastendeckel 4 wird jedenfalls so angesteuert, daß er während des Öffnungs- oder Schließvorganges des ersten flaches 2 geöffnet und ansonsten geschlossen ist. An einem Windschutzscheibenrahmen 6 des Fahrzeuges 1 ist ein Verschlußeinrichtung 7 vorgesehen, mit deren Hilfe ein vorderes Ende 8 des ersten flaches 2 im geschlossenen Zustand des ersten flaches 2 mit dem Windschutzscheibenrahmen 6 verbindbar ist. Das Öffnen und Schließen des ersten flaches 2 wird mit Hilfe eines Steuergerätes 9 durchgeführt, der einen entsprechenden Ablauf der Steuerung enthält. Zur Auslösung des Öffnungs- oder Schließvorganges des ersten flaches 2 ist ein im Innenraum des Fahrzeuges 1 angeordneter Taster 10 vorgesehen.

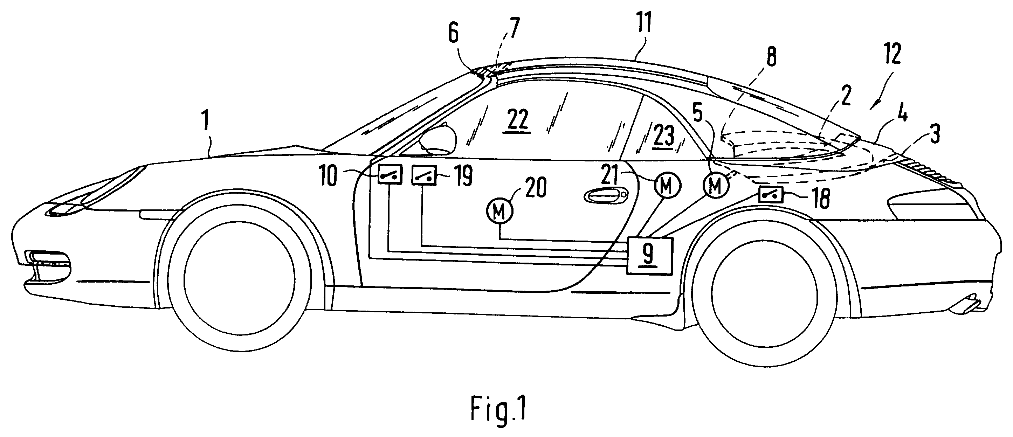

Bei dem in Fig. 1 dargestellten Zustand ist das erste Dach 2 vollständig geöffnet. Eine Demontage des ersten flaches 2 ist ausschließlich zu Reparaturzwecken vorgesehen. Zusätzlich zum ersten Dach 2 ist ein zweites Dach 11 auf das Fahrzeug 1 aufgesetzt und mit diesem durch die Verschlußeinrichtung 7 und weitere, nicht dargestellte Verbindungselemente im Bereich eines Fußes 12 verbunden. Da der Fuß 12 sowohl der Verdeckkastendeckel 4 wie auch das abgelegte erste Dach 2 überdeckt, würde in diesem Zustand eine Betätigung des ersten flaches 2 durch die Antriebseinrichtung 5 zu einer Kollision des ersten flaches 2 oder des Verdeckkastendeckels 4 mit dem zweiten Dach 11 führen.

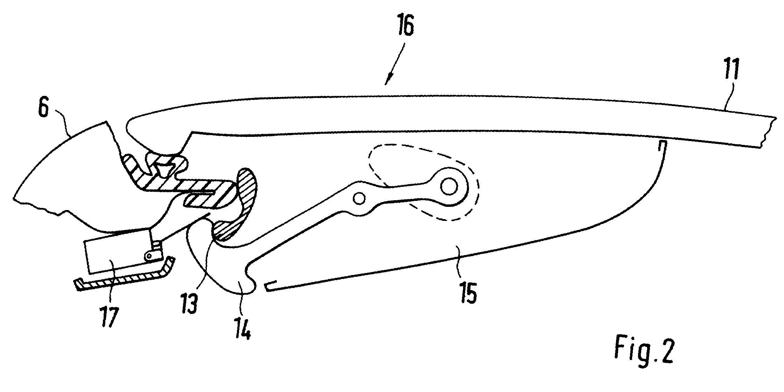

Fig. 2 zeigt einen Schnitt durch die Verschlußeinrichtung 7. Die Verschlußeinrichtung 7 besteht aus einer am Windschutzscheibenrahmen 6 gehaltenen Hakenaufnahme 13 und einen Verschlußhaken 14, der Bestandteil einer Verschlußbetätigung 15 ist. Eine erste Verschlußbetätigung 15 ist am vorderen Ende 8 des ersten flaches 2 angeordnet und elektrisch betätigbar, während eine zweite Verschlußbetätigung 15 an einem vorderen Ende 16 des zweiten flaches 11 angeordnet und mechanisch betätigbar ist. An der Verschlußaufnahme 13 ist ein als Mikroschalter ausgebildeter erster Geber 17 so angeordnet, daß er ein Signal abgibt, wenn der Verschlußhaken 14 in die Hakenaufnahme 13 eingegriffen hat und somit die Verschlußeinrichtung 15 eine Verbindung zwischen dem Windschutzscheibenrahmen 6 und dem zweiten Dach 11 bzw. dem ersten Dach 2 hergestellt hat.

Wie in Fig. 1 skizziert, ist ferner ein zweiter Geber 18 vorgesehen, der im Bereich des Verdeckkastens 3 angeordnet ist und dann ein Signal abgibt, wenn sich das erste Dach hinter der dargestellten, vollständig geöffneten Position befindet. Der zweite dargestellte Geber 18 kann auch durch andere Möglichkeiten zur Erkennung des vollständig geöffneten ersten flaches 2 ersetzt werden, wie beispielsweise durch eine Abfrage der Stellung des Verdeckkastendeckels 4 und der Stellung der Antriebseinrichtung 5.

Die Signale der Geber 17 und 18 werden der Steuereinrichtung 9 zugeführt. Die Steuereinrichtung 9 unterbindet nun jede Ansteuerung der Antriebseinrichtung 5, solange die Signale der Geber 17 und 18 gleichzeitig vorliegen; insbesondere bleibt eine Betätigung des Tasters 10 wirkungslos.

Mit der Steuereinrichtung 9 sind ferner eine Schaltergruppe 19, eine zweite Antriebseinrichtung 20 und eine dritte Antriebseinrichtung 21 verbunden. Die zweite Antriebseinrichtung 20 wirkt auf eine vordere Seitenscheibe 22, während die dritte Antriebseinrichtung 21 auf eine hintere Seitenscheibe 23 wirkt. Die Steuereinrichtung 9 betätigt die Antriebseinrichtung 20, 21 auf Anforderung durch die Schaltergruppe 19. Auf der gegenüberliegenden Seite des Fahrzeuges 1 sind eine weitere Schaltergruppe und weitere Antriebseinrichtungen für die dort angeordneten Seitenscheiben (nicht dargestellte) vorgesehen; durch die dargestellte Schaltergruppe 19 sind die Antriebseinrichtungen aller Seitenscheiben bedienbar.

Bei aufgesetztem zweiten Dach 11 sind die Seitenscheiben 22, 23 unabhängig voneinander absenkbar. Darüber hinaus sind für die vordere Seitenscheibe 22 Komfort-Funktionen verfügbar: Auf eine kurzzeitige Betätigung eines der Seitenscheibe 22 zugeordneten Schalters innerhalb der Schaltergruppe 19 hin wird die Seitenscheibe 22 vollständig abgesenkt (Komfort-Öffnen). In ähnlicher Weise kann durch eine kurzzeitige Betätigung eines dem Schließvorgang der Seitenscheibe 22 zugeordneten Schalters diese aus jeder beliebigen Position selbsttätig vollständig geschlossen werden (Komfort-Schließen).

Die vorgenannten Funktionen sind in vollem Umfange jedoch nur dann verfügbar, wenn und solange das Steuergerät 9 aus den Signalen der Geber 17 und 18 erkennt, daß das zweite Dach 11 aufgesetzt ist. Anderenfalls sind die Funktionen Komfort-Öffnen und Komfort-Schließen nicht verfügbar, da insbesondere bei geöffnetem ersten Dach 2 eine obere Begrenzung für die Schließbewegung der Seitenscheibe 22 fehlt. Ferner ist die Bewegung der hinteren Seitenscheibe 23 mit der Bewegung der vorderen Seitenscheibe 22 gekoppelt: Für ein Absenken der vorderen Seitenscheibe 22 wird die hintere Seitenscheibe 23 vollständig versenkt; dies gilt auch dann, wenn die vordere Seitenscheibe 22 nur teilweise abgesenkt werden soll.

Die vorstehend beschriebene Bedienung der Seitenscheiben 22 und 23 gilt in analoger Weise auch für die nicht dargestellten Seitenscheiben auf der gegenüberliegenden Seite des Fahrzeuges 1.

## Patentansprüche

1. Steuereinrichtung für ein Fahrzeug (1) mit
- einem am Fahrzeug ständig angeordneten ersten Dach (2) und einem abnehmbaren zweiten Dach (11), wobei das erste Dach im Sinne eine Öffnens und eines Schließens betätigt werden kann,
- eine Verschlußeinrichtung (7) zur lösbaren Verbindung der Dächer mit einem Windschutzscheibenrahmen (6),
- einem ersten Geber (17), der ein Signal abgibt, wenn die Verschlußeinrichtung eine Verbindung hergestellt hat,
- einem zweiten Geber (18), der ein Signal abgibt, wenn das erste Dach geöffnet ist,
- wobei die Steuereinrichtung (9) eine Betätigung des ersten flaches unterbindet, wenn gleichzeitig von beiden Geber ein Signal anliegt.

2. Steuereinrichtung nach Anspruch 1, **dadurch gekennzeichnet**, daß die Steuereinrichtung (9) die Ansteuerung weiterer Betätigungseinrichtungen (20,21) beeinflußt, wenn gleichzeitig von beiden Gebern (17, 18) ein Signal anliegt.

3. Steuereinrichtung nach Anspruch 2, **dadurch gekennzeichnet**, daß die weiteren Betätigungseinrichtungen Fensterheber (20, 21) sind und
- alle Seitenscheiben (22, 23) absenkbar und Funktionen wie Komfort-Öffnen und Komfort-Schließen verfügbar sind, wenn gleichzeitig von beiden Gebern (17, 18) ein Signal anliegt, und anderenfalls
- nur ein Teil der Seitenscheiben absenkbar und Funktionen wie Komfort-Öffnen und Komfort-Schließen nicht verfügbar sind.

4. Steuereinrichtung nach einem der Ansprüche 1 bis 3, **dadurch gekennzeichnet**, daß das erste Dach ein flexibles Faltdach und das zweite Dach ein Hardtop ist.
